# EUROPEAN PATENT SPECIFICATION

(11) **EP 3 219 678 B1**
(45) Date of publication and mention of the grant of the patent: **14.11.2018**
(21) Application number: 16160952.4
(22) Date of filing: 17.03.2016
(51) Int. Cl.: C01G 53/00, H01M 4/525

(54) **SILICON DOPING OF HIGH VOLTAGE SPINEL**
SILICIUMDOTIERUNG EINES HOCHSPANNUNGSSPINELLS
DOPAGE DE SILICIUM DE SPINELLE HAUTE TENSION

(43) Date of publication of application: 20.09.2017
(73) Proprietor: Bayerische Motoren Werke Aktiengesellschaft, 80809 München (DE)
(72) Inventor: Kim, Sung-Jin, 80995 München (DE); Gentschev, Ann-Christin, 80637 München (DE); Detig-Karlou, Kamelia, 82049 Pullach (DE); Keppeler, Miriam Karin, 649813 Singapore (SG); Srinivasan, Madhavi, 689673 Singapore (SG)
(74) Representative: Epping - Hermann - Fischer

(56) References cited:
- JP-A- 2003 197 194
- US-A1- 2003 082 453
- US-A1- 2007 172 734
- OH S H ET AL: "Structural and electrochemical investigations on the LiNi0.5-xMn1.5-yMx+yO4 (M=Cr, Al, Zr) compound for 5V cathode material", JOURNAL OF ALLOYS AND COMPOUNDS, ELSEVIER SEQUOIA, LAUSANNE, CH, vol. 469, no. 1-2, 5 February 2009 (2009-02-05), pages 244-250, XP025881593, ISSN: 0925-8388, DOI: 10.1016/J.JALLCOM.2008.01.097 [retrieved on 2008-03-17]
- NAGASUBRAMANIAN ARUN ET AL: "Importance of nanostructure for reversible Li-insertion into octahedral sites of LiNi0.5Mn1.5O4 and its application towards aqueous Li-ion chemistry", JOURNAL OF POWER SOURCES, vol. 280, 15 January 2015 (2015-01-15), pages 240-245, XP055289884, CH ISSN: 0378-7753, DOI: 10.1016/j.jpowsour.2015.01.095

## Description

This invention relates to a cathode active material for a Lithium (Li)-ion cell.

Li-ion battery technologies are seen as the most promising power sources for electric vehicles (EV), hybrid electric vehicles (HEV), and plug-in hybrid electric vehicles (PHEV) to meet the requirements of next-generation electromobility, see e.g. D. Andre et al., J. Mater. Chem. A, 2015, 3, 6709-6732.

Since the widely applied and commercialized active cathode compounds for consumer and automotive cells are based on LiCoO₂ and Li[Ni_{1/3}Mn_{1/3}Co_{1/3}]O₂ (NMC), current research and development focus on new and high-performance Co-free active materials in order to address the environmental issues, noxious effects, and high costs caused by Cobalt (Co).

Among several candidates, Mn-based spinel LiNi_{0.5}Mn_{1.5}O₄ has become one of the top choices due to its facile 3D Li-ion diffusion ways and remarkable high charge-discharge voltage plateau at around 4,7 V (vs. Li/Li⁺), which leads to high energy densities in the range of 650 Wh kg⁻¹, see e.g. G.B. Zhong et al., Electrochim. Acta, 2011, 56, 6554-6561.

Sufficing the capacity targets, operation in this high voltage range could greatly reduce the amount of cells in a battery pack system that is needed to run e-based vehicles.

However, prior to the commercialization of high voltage spinel, i.e. LiNi_{0.5}Mn_{1.5}O₄, electrochemical parameters e. g. cycle performance and rate capability need to be improved and the strong capacity fade, especially observed at elevated temperatures is one of the major challenges that need to be tackled.

US 2007/172734 A1 discloses a lithium secondary battery, comprising a compound represented by general formula (I) described below as a cathode active material:

Liₐ₁(Niₓ₁Mn_{2-x1-y1}M1_{y1})O₄ (I)

wherein the M1 is at least one of Ti, Si, Mg and Al, the a1 satisfies 0≦a1≦1, the x1 satisfies 0.4≦x1≦0.6, and the y1 satisfies 0≦y1≦0.4. In the experimental section, the specific cathode active material Li_{0.5}(Ni_{0.5}Mn_{1.45}Si_{0.05})O₄ (sample 13) is disclosed.

US 2003/082453 A1 discloses a cathode active material having the composition Li_{0.5}(Ni_{0.5}Mn_{1.45}Si_{0.05})O₄.

JP 2003 197194 A discloses a cathode active material having the composition Li_{0.5}(Ni_{0.5}Mn_{1.3}Si_{0.2})O₄ (sample 7).

Oh S. H. et al.: "Structural and electrochemical investigations on the Li Ni0.5-xMn1.5-yMx+yO4 (M=Cr, Al, Zr) compound for 5V cathode material", Journal of Alloys and Compounds, Elsevier Sequoia, Lausanne, CH, Vol. 469, No. 1-2, 5 February 2009 ("009-02-05), pages 244-250 discloses a cathode active material having the composition Li_{0.5}(Ni_{0.5}Mn_{1.45}Zr_{0.05})O₄.

Thus, purpose of the invention is to provide an improved cathode active material for a Li-ion cell (Li-ion cell).

This purpose is accomplished by cathode active material for a Lithium-ion cell according to claim 1.

According to various reference examples, the cathode active material includes high voltage spinel, which is at least partly substituted with Silicon (Si), Vanadium (V), Hafnium (Hf) or Zirconium (Zr).

Partial substitution of Manganese (Mn) in high voltage spinels, such as LiNi_{0.5}Mn_{1.5}O₄, with one or a mixture of these elements results in advantageous features of the cathode active material for the use in Li-ion cells especially designed for automotive applications.

In high voltage spinel, these dopants interrupt the ordering between Mn⁴⁺ and Ni²⁺ which minimizes isolated domains of active Ni^{2+/3+/4+} redox centers separated by inactive Mn⁴⁺ ions and, therefore, the internal resistance is decreased. See e.g., Chemelewski et al. J. Phys. Chem. C 2013, 117, 12465-12471. Moreover, electronic conductivity and Li diffusion kinetics can be improved from which automotive applications can benefit.

Substitution elements, such as Si, V, Zr, and Hf have high bond dissociation energies with Oxygen (O) (significantly higher than Mn and Nickel (Ni)) which improves the chemical and structural stability of the oxygen rich spinel lattice and, therefore, the electrochemical performance of the resulting cathode material. Improved chemical and structural stabilities are beneficial to suppress material degradation e. g. Mn dissolution associated with oxygen deficiency. Oxygen deficiency and Mn dissolution are critical processes for cell lifetime and are to be suppressed. Dissolution of Mn is supposed to harm Li-ion cells with conducting salts, e.g. LiPF₆, due to transportation processes of solvated Mn²⁺ ions through the electrolyte followed by deposition on the negative electrode according to the disproportionation reaction 2Mn³⁺₍ₛ₎ → Mn⁴⁺₍ₛ₎+ Mn²⁺_{(I)}.

According to the present invention the only substitution element (dopant) is silicon.

The Si-O bond exhibits a very high dissociation energy of 798 kJ mol⁻¹ at 298 K. This is far beyond the dissociation energies of the Mn-O and Ni-O bonds, which are 402 kJ mol⁻¹ and 392 kJ mol⁻¹ (at 298 K), respectively, and therefore is expected to improve the chemical and structural stability of an oxygen-rich crystal lattice greatly. Moreover, Si as dopant is a non-toxic, eco-friendly and low-cost element. The person skilled in the art may reference the values of the mentioned dissociation energies in e.g. T. L. Cottrell, The Strengths of Chemical Bonds, 2d ed., Butterworth, London, 1958.

A reference cathode active material, including the cathode active material according to the present invention, is LiNi_{0.5}Mn_{1.5-x}SiₓO₄. This means that Si substitutes Mn in the common high voltage spinel LiNi_{0.5}Mn_{1.5}O₄. The most promising ratio of Si is 0 < x ≤ 0.2. This amount of Si leads to spinels showing high crystallinity and a homogenous distribution of Si.

Substitution of LiNi_{0.5}Mn_{1.5}SiO₄ with the ratio of Si being 0 < x ≤ 0.2 in LiNi_{0.5}Mn_{1.5-x}SiₓO₄ results in a mixture of two cubic phases, a disordered cubic phase, named Fd-3m, and an ordered phase, named P4₃32. The prisitine LiNi_{0.5}Mn_{1.5}O₄ material shows a molar ratio of disordered phase material to ordered phase material of about 0.27 meaning that most of the material is in the ordered phase. The higher the doping ratio of Si, the 16d-site of the disordered phase gets more favored to be occupied by Si atoms. This leads to the effect that with a Si content of x = 0.2 the molar ratio of disordered phase to ordered phase material in LiNi_{0.5}Mn_{1.3}Si_{0.2}O₄ shifts to about 0.38.

Substitution levels of Mn by Si in the ratio of around 0.2 lead to an optimum of stability and cycling performance. Higher ratios than 0.2 (i.e. relatively more disordered phase material) are possible but leads to high cation disorder.

It has to be noted that the disordered cubic phase material shows rock salt lattice structure (just like NiₓO) within the majority of ordered phase material, which is associated with Mn³⁺ ions in the lattice. The unsubstituted spinel can be written as LiNi²⁺ₓMn³⁺₁₋₂ₓMn⁴⁺₁₋ₓO₄ (0 ≤ x ≤ 0.5) and the formulas of the substituted materials are LiNi_{0.5}Mn_{1.5-x}SiₓO_{4-δ} (0 ≤ x ≤ 0.5). The parameter δ indicates oxygen deficiency and can be in the range of (0 ≤ δ ≤ 0.02).

On the one hand, the formation of the disordered cubic phase, i.e. increased conversion of Mn⁴⁺ sites in the ordered phase to Mn⁴⁺/Mn³⁺/Si⁴⁺ sites in the disordered phase with increasing Si doping rates, results in an cathode active material with better electrical power parameters parallel to better lifetime parameters due to suppressed Mn dissolution because of the strong Dopant-Oxygen bonding.

On the other hand, as the disordered phase is - due to the Mn³⁺ atom - prone to Jahn-Teller-distortion of the lattice, which is harmful to the crystal structure, the shifting towards more disordered phase material within the mixture is undesired. Therefore, x = 0.2 marks an upper limit of reasonable Si content.

For the purpose of simplicity, subsequently, the formula LiNi_{0.5}Mn_{1.5-x}SiₓO₄ is addressed in this document.

The method which is disclosed is a method for the synthesis and processing a cathode active material for a Li-ion cell, said cathode active material including at least one compound having high voltage spinel structure according to the formula LiNi_{0.5}Mn_{1.5-x}SiₓO₄ with 0 < x ≤ 0.2, wherein said synthesis method comprises:
- mixing of stoichiometric amounts of Lithiumacetate dihydrate (LiCH₃OO*2H₂O), Nickel(II)nitrate hexahydrate (Ni(NO₃)₂*6H₂O), Manganese(III)acetate dihydrate (MnCH₃COO)₃*2H₂O), and Tetraethylorthosilicate (Si(OC₂H₅)₄ with Ethanol as dispersion medium by milling obtaining a milled mixture,
- calcination of the milled mixture and subsequent cooling down to room temperature,
- grinding of the calcined, milled mixture obtaining a grinded mixture,
- annealing of the grinded mixture in ambient obtaining the cathode active material.

This means that powders of the material LiNi_{0.5}Mn_{1.5-x}SiₓO₄ with 0 < x ≤ 0.2 are synthesized by a two-step treatment process via solid-state reaction. If desired, the obtained material can be characterized by powder X-Ray diffraction, by field emission scanning electron microscopy and by Raman spectrometry or Fourier Transform Infrared Spectrometry.

Preferably, the method for synthesis of a cathode active material for a Li-ion cell is done with the calcination at a calcination temperature of 800 - 1000 °C in ambient atmosphere lasting for 4 - 6 hours with subsequent cooling down to 0 - 50 °C.

Furthermore, best results are obtained if the method for synthesizing a cathode active material for a Li-ion cell comprises the annealing step done at an annealing temperature of 600 - 800 °C in ambient atmosphere lasting for 15 - 30 hours.

The obtained cathode material, that can be used in a Li-ion cell on a working electrode containing the inventive cathode active material, can be acquired by:
- Mixing of about 70-98 wt-% of active materials, with about 1-20 wt-% of conductive additives (e.g. Super P) and about 1-10 wt-% of binder (e.g. polyvinylidene fluoride (PVDF) binder) in a solvent (e.g. N-methyl-2-pyrrolidone (NMP), N-ethyl-2-pyrrolidone (NEP), water) to form homogenous slurries in an agate mortar or planetary tank mixer.
- Coating of the as-prepared slurries on Aluminum collector foils with a doctor blade or other coating techniques, such as slot dye, gravure, comma, curtain, roll coating.
- Drying at about 60 °C in a vacuum oven for 8-12 hours.
- Pressing of the electrodes to the desired coating thickness (10-200µm, with electrode porosity within the range of 15-50%) and punching into desired shape.
- Assembly in a Li-ion cell.

The higher the doping level the more a trend to increased ratios of disordered Fd-3m phase associated with amounts of Mn³⁺ ions occurs. Especially active material with the high doping levels (Si_{0.15} and Si_{0.20}) exhibit greatly enhanced electrochemical stability. The enhanced electrochemical performance is related to the high Si-O bond dissociation energy which is far beyond of the Mn-O and Ni-O bond. Therefore, the structural and chemical stability is enlarged when Si is incorporated into an Oxygen rich crystal lattice and might also suppress Mn dissolution. A high potential of Si doping enhances the electrochemical activity of LiNi_{0.5}Mn_{1.5}O₄. This, and also due to Si as dopant is a non-toxic, eco-friendly and low-cost element, make LiNi_{0.5}Mn_{1.5-x}SiₓO₄ compounds with 0 < x ≤ 0.2 to attractive promising candidates for application as high voltage cathode materials in Li-ion battery technologies.

The doping with one of the dopants Vanadium (V), Zirconium (Zr) and Hafnium (Hf) instead of Si results in materials with similar behaviour compared to Si doped high voltage spinel material. This results from similar ionic radii (in the case of Si⁴⁺) and comparable high Dopant-Oxygen bonding energy. As for Si doping, the alternative dopants have a 4+ oxidation state at least on average. Thus, the Mn⁴⁺ doping site of the ordered phase material was targeted.

The reagent for Vanadium doping is V₂O₅/V₂O₃, or V₂O₄. The precursor for the doping with Hafnium is HfO₂ or HfCl₄. The reagent for the doping with Zirconium can be Zr(C₅H₇O₂)₄, Zirconium acetyl acetonate, Zirconium(IV) acetates hydroxide, Zirconium(IV) ethoxide, Zirconium acrylate, or Zirconium hydroxide. The precursor for the doping with Silicon are Si(OC₂H₅)₄(TEOS), Si(OCH₃)₄(TMOS), Si(OC₃H₇)₄(TPOS), or Si(OC₃H₇)(TPiOS).

The invention is based on the following thoughts:
Manganese (Mn) rich cathode active materials, such as the spinels LiNi_{0.5}Mn_{1.5}O₄ and LiMn₂O₄, play a crucial role in order to achieve high energy densities on Li-ion cell level and to reduce costs. The synthesis includes the high temperature reaction of stoichiometric amounts of the elements in the form of oxides, acetates or nitrates. Other synthesis methods include spray drying and hydrothermal synthesis. The electrochemical performance of such manganese rich materials is strongly dependent on their composition. For high voltage spinel, LiNi_{0.5}Mn_{1.5}O₄, the content of disordered phase influences the C-rate and power performance. For LiNi_{0.5}Mn_{1.5}O₄ and the spinel LiMn₂O₄ cycle- and storage life is significantly affected by the dissolution of manganese into the electrolyte.

Mn based spinel materials show the effect of Mn dissolution into the electrolyte via disproportion: 2 Mn³⁺ → Mn²⁺ + Mn⁴⁺. This reaction is especially critical at high temperatures and leads to the degradation of the cathode active material. Another detrimental effect arises from the possible manganese (metal) deposition on the anode. Both negatively affects the cell lifetime.

Thus, it is suggested to partially substitute Mn with elements that have similar oxidation number on average, compatible ionic radii and strong metal-oxygen bonds. Suggested substitution elements (A) are Silicon, Hafnium, Zirconium, and Vanadium. As a result of the substitution, materials of the general composition LiNi_{0,5}Mn_{1,5-x}AₓO_{4-δ} (0 ≤ x ≤ 0,5) are formed. The doping level should be in the range of 0 < x ≤ 0.2 and 0 ≤ δ ≤ 0.02.

Cathode active material which contains one or both phases of doped high voltage spinel is characterized by high dissociation energy of the Oxygen to Silicon, Vanadium, Hafnium, and Zirconium, which provides high Oxygen lattice stability, reduces the amount of Manganese, and therefore prevents the dissolution of Manganese into the electrolyte. Therefore, an improvement in cycle and storage life is accomplished.

Furthermore, in the ordered phase of high voltage spinel, LiNi_{0.5}Mn⁴⁺_{1.5-x}A⁴⁺ₓO₄, an interruption of cation-ordering is induced. Dopants interrupt the ordering between Mn⁴⁺ and Ni²⁺ which minimizes isolated domains of active Ni^{2+/3+/4+} redox centers separated by inactive Mn⁴⁺-ions and favors the disordered phase with facilitated Lithium diffusivity. This leads to better rate and power performance in the cell. With increasing parameter x, the disordered phase is favored.

In the following, the inventive cathode active material and reference examples are discussed and illustrated by the attached figures. From these, further details, preferred embodiments and concrete characteristics result. In particular, these are shown schematically by
Figs. 1a-c Cyclic voltammograms of LiNi_{0.5}Mn_{1.5}O₄ and Si modified materials.
Fig. 2 Initial charge/discharge curves of LiNi_{0.5}Mn_{1.5}O₄ and Si modified materials.
Figs. 3a-b Cycling performance of LiNi_{0.5}Mn_{1.5}O₄ and Si modified materials at room temperature.
Fig. 4 Rate performance of LiNi_{0.5}Mn_{1.5}O₄ and Si modified materials at various C rates.

As discrete reference examples of doping the high voltage spinel LiNi_{0.5}Mn_{1.5}O₄ with Silicon the configurations LiNi_{0.5}Mn_{1.45}Si_{0.05}O₄, LiNi_{0.5}Mn_{1.4}Si_{0.1}O₄, and LiNi_{0.5}Mn_{1.3}Si_{0.2}O₄ are chosen. Acccording to the present invention, LiNi_{0.5}Mn_{1.35}Si_{0.15}O₄ is used.

The relevant powders were synthesized by a two-step heat treatment process via solid-state reaction, following:
- Mixing of stoichiometric amounts of Lithiumacetate dihydrate (LiCH₃OO*2H₂O, 97 %, Aldrich, (5% excess)), Nickel(II)nitrate hexahydrate (Ni(NO₃)₂*6H₂O, 97 %, Fluka), Manganese(III)acetate dihydrate (Mn(CH₃OO)₃*2H₂O, 97 %, Aldrich), and Tetraethylorthosilicate (Si(OC₂H₅)₄, 98 %, Aldrich) in a ball-milling machine (SPEX SamplePrep 8000D Dual Mixer/Mill, Titanium balls) with Ethanol as dispersion medium. H₂O as dispersion medium can be used depending on the hydrolysis and condensation rates of the silicon reagent. A combination of the latter as dispersion medium by milling obtaining a milled mixture,
- Calcination: The milled mixtures were first calcined in ambient atmosphere at 900 °C for 5 h, and cooled down to room temperature.
- Grinding and annealing: The calcined mixtures were grinded in a mortar and then annealed to 700 °C in ambient atmosphere for 24 h.

The obtained material are LiNi_{0.5}Mn_{1.5-x}SiₓO₄ with 0 < x ≤ 0,2, whereby the examples LiNi_{0.5}Mn_{1.45}Si_{0.05}O₄, LiNi_{0.5}Mn_{1.4}Si_{0.1}O₄, LiNi_{0.5}Mn_{1.35}Si_{0.15}O₄, and LiNi_{0.5}Mn_{1.3}Si_{0,2}O₄ will be further discussed in comparison with the unsubstituted material LiNi_{0.5}Mn_{1.5}O₄ in the following. According to constant voltage measurements, the molar ratio of disordered cubic phase material to ordered cubic phase material is -0,1 for LiNi_{0.5}Mn_{1.5}O₄ and increases with higher Si doping ratio resulting to -0.314 for LiNi_{0.5}Mn_{1.45}Si_{0.05}O₄, ∼0.282 for LiNi_{0.5}Mn_{1.4}Si_{0.1}O₄, ∼0.376 for LiNi_{0.5}Mn_{1.35}Si_{0.15}O₄ and ∼0.379 for LiNi_{0.5}Mn_{1.3}Si_{0.2}O₄.

The powders were used to prepare positive electrodes for Li-ion cells by:
- Mixing 70-98 wt-% of active materials, with 1-20 wt-% of conductive additives (Super P Li carbon, 99 %, Timcal) and 1-10 wt-% of polyvinylidene fluoride (PVDF) binder (Solef 5130 from SOLVAY) in N-methyl-2-pyrrolidone (99.85 %, BASF, Germany) as the solvent to form homogenous slurries in an agate mortar.
- Coating of the as-prepared slurries on Aluminum (Al) foils with a doctor blade.
- Drying at 60 °C overnight in a vacuum oven.
- Roll-pressing of the electrodes and punching into discs with diameters of 16 mm.
- Drying of the discs overnight in a vacuum oven and assembling into coin cells (CR2016) with a Li foil (0.59 mm thickness, Hohsen Corp., Japan) as the counter and reference electrode in an argon-filled atmosphere (H₂O, O₂ < 1 ppm, MBraun, Unilab, USA).
- Use of LP50 electrolyte (Charlston Technologies PTE LTD, 1M LiPF₆ solution in Ethylene carbonate (EC) - Dimethyl carbonate (DMC) (1:1 w/w)) and separator (Celgard 2400) during cell assembly.

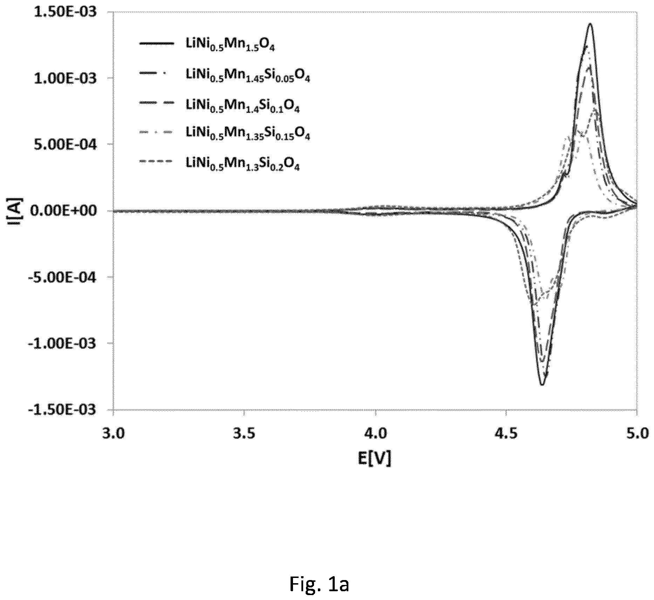

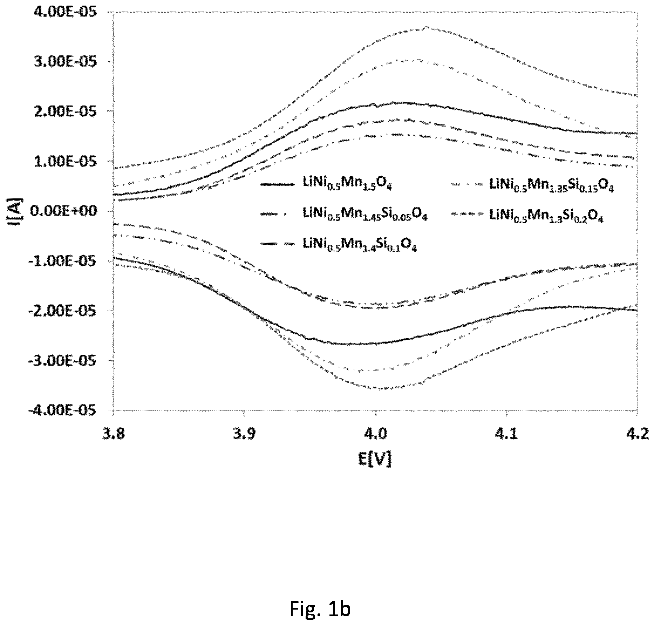

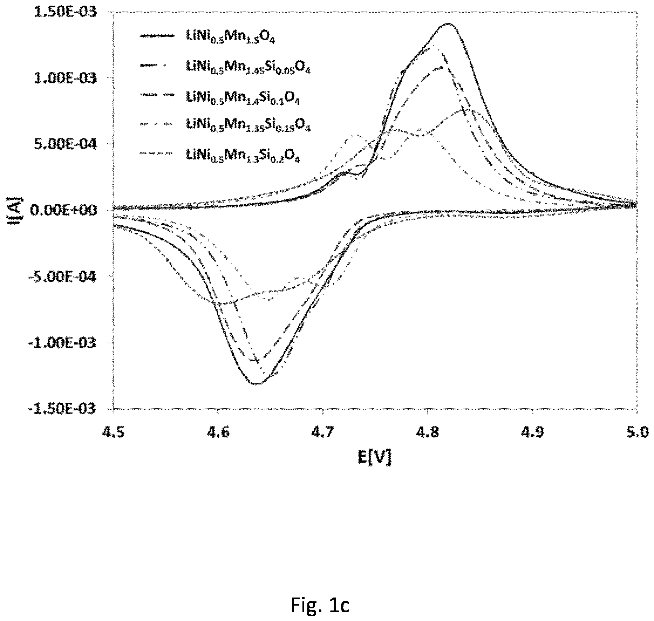

The electrochemical characterization of these electrodes displays the advantages of Si doping of high voltage spinel. Figs. 1a-c shows the cyclic voltammetry profiles at a scanning rate of 0.1 mV s⁻¹ of half cells containing LiNi_{0.5}Mn_{1.5}O₄ and Si modified spinels as working electrodes, respectively. Fig. 1b is the magnified version of Fig. 1a in the 4.0 V region. Fig. 1c is magnified in the region around 4.7 V.

The intense peak located between 4.6 and 4.8 V in Figs. 1a-c originates from two two-phase reaction steps and is ascribed to the two-step oxidation/reduction of Ni^{2+/3+/4+}. Peak splitting for the Ni^{2+/3+} (lower voltage) and the Ni^{3+/4+} (higher voltage) redox processes is seen especially for samples with highest doping level (x = 0.2) and also seen as vague depression of curve for LiNi_{0.5}Mn_{1.5}O₄, LiNi_{0.5}Mn_{1.45}Si_{0.05}O₄, LiNi_{0.5}Mn_{1.4}Si_{0.1}O₄, and LiNi_{0.5}Mn_{1.35}Si_{0.15}O₄. According to state of the art this peak separation can be associated with the presence of the disordered F3-dm phase, showing that disordered regimes are more pronounced with higher Si doping levels. Smaller differences in the potential between the anodic and cathodic peaks with higher Si doping levels show improved Li insertion/extraction kinetics compared to pure LiNi_{0.5}Mn_{1.5}O₄. The second less intense redox peak mainly located at 4.0 V in Figs. 1a, 1b is observed for all samples, and can be attributed to the Mn^{3+/4+} couple, indicating a reasonable amount of Mn³⁺ in the structure. Highest intensity is found for LiNi_{0.5}Mn_{1.35}Si_{0.15}O₄ and LiNi_{0.5}Mn_{1.30}Si_{0.2}O₄, indicating a trend towards higher Mn³⁺ amount associated with superiorly Fd-3m proportion.

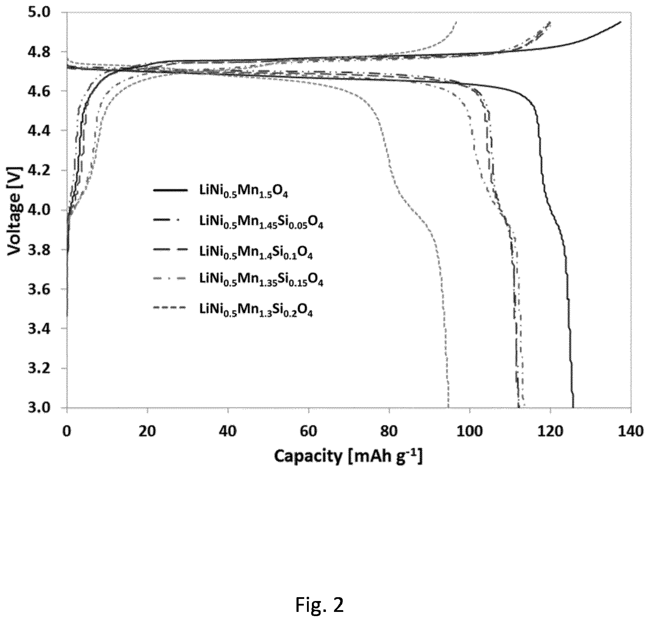

The initial discharge/charge profiles at 0.5 C rate in the 3.00 - 4.95 V range for LiNi_{0.5}Mn_{1.5}O₄ and Si modified samples are presented in Fig 2. The initial discharge capacities are 126, 113, 113, 114 and 95 mAh g⁻¹ for LiNi_{0.5}Mn_{1.5}O₄, LiNi_{0.5}Mn_{1.45}Si_{0.05}O₄, LiNi_{0.5}Mn_{1.4}Si_{0.1}O₄, LiNi_{0.5}Mn_{1.35}Si_{0.15}O₄, and LiNi_{0.5}Mn_{1.3}Si_{0.2}O₄, respectively. A flat, extended plateau at 4.7 V ascribed to the oxidation/reduction of Ni^{2+/3+/4+} is observed for all samples. For the Si doped samples the plateau is slightly shifted up to higher voltages values in the order Si_{0.20}, Si_{0.15}, Si_{0.10}, Si_{0.05} indicating the highest power density for the LiNi_{0.5}Mn_{1.45}Si_{0.05}O₄ sample. In addition, there are small plateaus of varying length in the 4.0 V region associated with the Mn^{3+/4+} redox couple.

This is in agreement with the analysis according to Figs. 1a-c and further proves the presence of Mn³⁺ in the system associated with a reasonable proportion of disordered Fd-3m regions.

Both, the two cubic space groups (Fd-3m, P4₃32) and the presence of Mn³⁺ in LiNi_{0.5}Mn_{1.5}O₄ is critical for the electrochemical performance of the electrodes. Mn³⁺ is subjected to disproportionation reaction which provides Mn²⁺ that is soluble in LiPF₆ based electrolytes leading to degradation of the positive electrode and deposition on the negative electrode as follows from prior art. However, the existence of an appropriate amount of Mn³⁺ is to be seen as beneficial for the electrochemical performance, since the disordered F3-dm phase supports the electrochemical performance based on its higher conductivity for electrons and Li ions. It is known from prior art that formation of Mn³⁺ in LiNi_{0.5}Mn_{1.5}O₄ spinel facilitates the Ni/Mn disorder leading to the F3-dm phase. Ni/Mn disorders are seen to decrease the internal resistance since Ni^{2+/3+/4+} electrochemically active centers isolated by inactive Mn⁴⁺ in an ordered structure becomes accessible. The electrochemical active Mn species participates in the redox reaction which supports compensation of capacity loss caused by substitution of Ni during Si doping. Furthermore, it is known that Mn³⁺ ions support the electron hopping conduction mechanism by acting as internal carriers according to Ni^{2+/3+} → Mn⁴⁺ → Ni^{3+/4+} as well as Ni^{2+/3+} → Mn⁴⁺ ↔ Mn³⁺ → Ni^{3+/4+}. These two additional pathways are not present at the P4₃32 polymorph according to prior art related to undoped high voltage spinel leading to comparatively faster charge transfer in the Fd-3m system. Moreover, assuming all Mn ions exhibit an oxidation state of 4+, LiNi_{0.5}Mn_{1.5}O₄ would be stochiometrically ordered without any Oxygen deficiency, which may not support a fast Li⁺ transportation. It is observed that the higher the doping level a trend towards higher degree of F3-dm phase associated with Mn³⁺ is presented in the material.

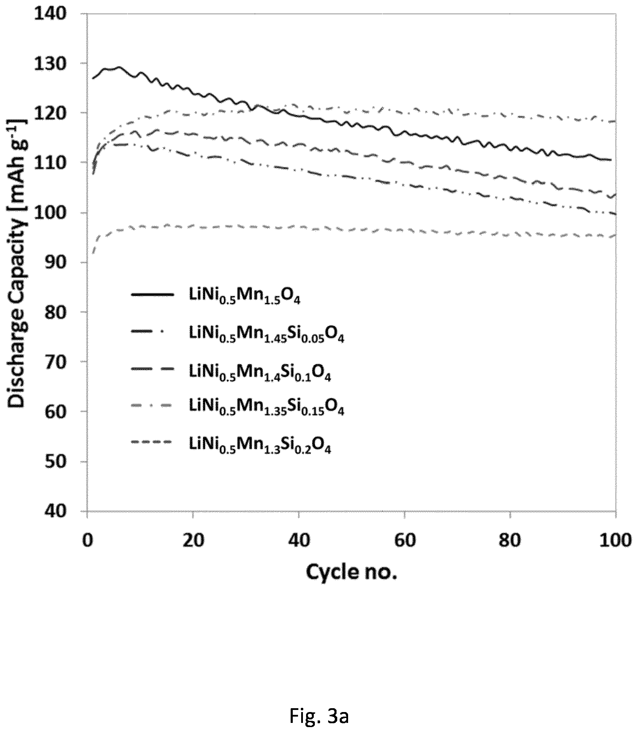

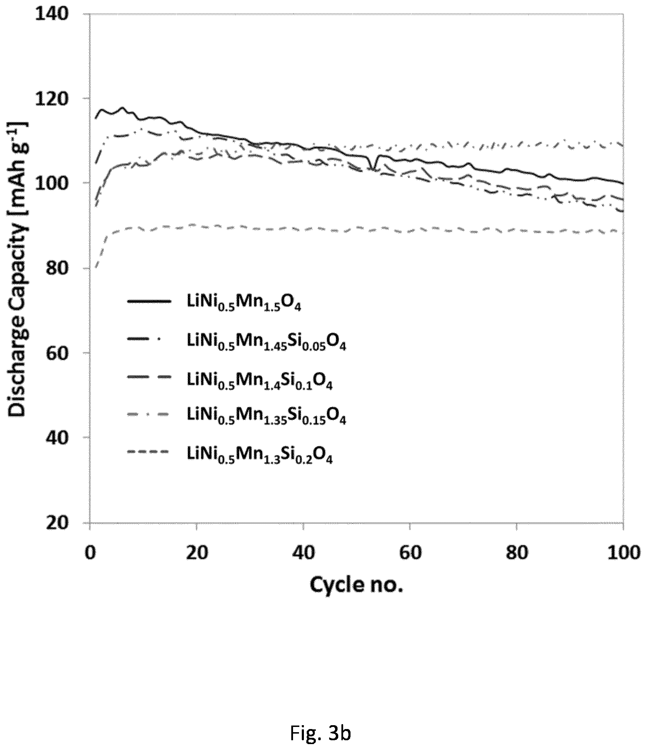

From Figs. 3a-b it can be seen that the samples with the highest Si amount (Si_{0.15} and Si_{0.20}) show enhanced cycle stability even over the pristine LiNi_{0,5}Mn_{1,5}O₄ at the tested range of 0.5 (see Fig. 3a) and 1C rate (see Fig. 3b) for 100 cycles as presented in the cycle performance diagrams of Figs. 3a-b. It can also be observed, that the sample with the second highest doping level LiNi_{0.5}Mn_{1.35}Si_{0.15}O₄ shows superior capacity values among all Si modified samples and the pristine LiNi_{0.5}Mn_{1.5}O₄ starting from the 40^{th} cycle.

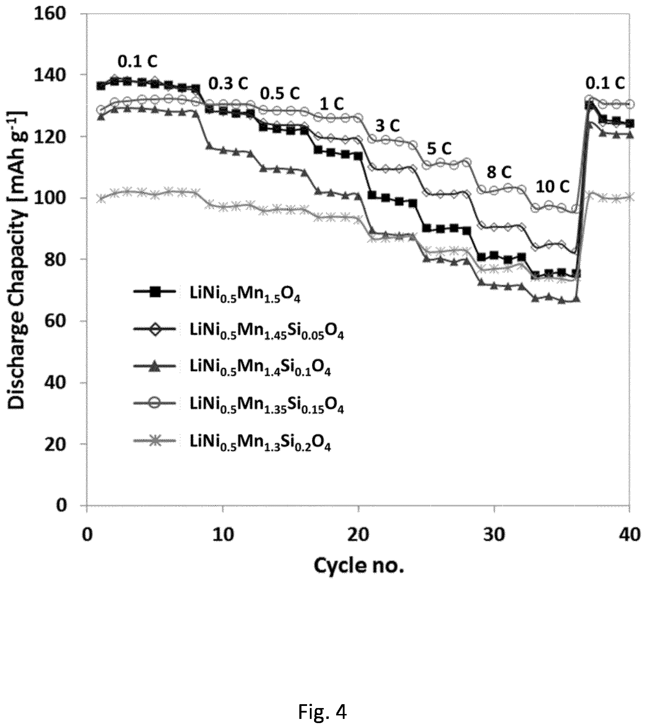

To demonstrate the rate performance of the LiNi_{0.5}Mn_{1.5}O₄ and the Si modified spinels, the samples were discharged at various higher C rates from 0.1 to 10 C and finally again at 0.1 C according to Fig. 4. At higher C rates, the difference in the resulting capacities between the pristine LiNi_{0.5}Mn_{1.5}O₄ and the Si modified samples are more pronounced, and starting from 0.5 C rates LiNi_{0.5}Mn_{1.45}Si_{0.05}O₄ and LiNi_{0.5}Mn_{1.35}Si_{0.15}O₄ deliver superior capacity values over the pure LiNi_{0.5}Mn_{1.5}O₄. After cycling from 0.1 C to 10 C rates and applying again the C-rate of 0.1, the initial discharge capacity values can be reached again for all samples indicating an excellent reversible electrochemical behaviour.

In general, it is shown that the higher the doping level a trend to increased ratios of disordered Fd-3m phase associated with detectable amounts of Mn³⁺ ions occurs. Especially active material with the two highest doping levels (Si_{0.15} and Si_{0.20}) exhibit greatly enhanced electrochemical stability. The enhanced electrochemical performance is related to the high Si-O bond dissociation energy which is far beyond of the Mn-O and Ni-O bond. Therefore, the structural and chemical stability is enlarged when Si is incorporated into an Oxygen rich crystal lattice and might also suppress Mn dissolution. A high potential of Si doping enhances the electrochemical activity of LiNi_{0.5}Mn_{1.5}O₄. This, and also due to Si as dopant is a non-toxic, eco-friendly and low-cost element, make LiNi_{0.5}Mn_{1.5-x}SiₓO₄ compounds with 0 < x ≤ 0.2 to attractive promising candidates for application as high voltage cathode materials in Li-ion battery technologies.

## Claims

1. Cathode active material for a Li-ion cell corresponding to the formula LiNi_{0.5}Mn_{1.5-x}SiₓO₄ with x being 0.15.

## Patentansprüche

1. Kathodenaktives Material für eine Lithium-Ionen-Zelle entsprechend der Formel LiNi_{0,5}Mn_{1,5-x}SiₓO₄ mit x = 0,15.

## Revendications

1. Matériau actif cathodique pour une cellule Li-ion correspondant à la formule LiNi_{0,5}Mn_{1,5-x}SiₓO₄ avec x étant 0, 15.
